# EUROPEAN PATENT SPECIFICATION

(11) **EP 3 039 891 B1**
(45) Date of publication and mention of the grant of the patent: **14.08.2019**
(21) Application number: 13892315.6
(22) Date of filing: 26.08.2013
(51) Int. Cl.: H04L 12/18, H04W 24/08, H04L 29/08, H04L 29/06

(54) **A METHOD AND ARRANGEMENTS IN A COMMUNICATION SYSTEM FOR ENABLING FEEDBACK TRANSMISSION**
VERFAHREN UND ANORDNUNGEN IN EINEM KOMMUNIKATIONSSYSTEM ZUR AKTIVIERUNG EINER RÜCKÜBERTRAGUNG
PROCÉDÉ ET SYSTÈME DE TRANSMISSION D'INFORMATIONS EN RETOUR DANS UN SYSTÈME DE COMMUNICATION

(43) Date of publication of application: 06.07.2016
(73) Proprietor: Telefonaktiebolaget LM Ericsson (publ), 164 83 Stockholm (SE)
(72) Inventor: CHEN, Kun, Shanghai 200333 (CN); LING, Jie, Shanghai 200335 (CN); XIE, Jinyang, Shanghai 201204 (CN)
(74) Representative: Zacco Sweden AB
(86) International application number: PCT/CN2013/082245
(87) International publication number: WO 2015/027370

(56) References cited:
- EP-A1- 1 624 610
- WO-A1-2010/069372
- CN-A- 101 854 588
- CN-A- 101 873 530
- CN-A- 102 752 184
- US-A1- 2013 128 756
- US-A1- 2013 159 457

## Description

### Technical field

The present disclosure relates to a method for providing a HTTP streaming service from a network node to a user equipment via broadcasting, and processing devices which are capable of executing such a method.

### Background

Multimedia Broadcast Multicast Services (MBMS) is a point to multipoint interface specification for existing and upcoming 3GPP cellular networks, which is designed to provide efficient delivery of broadcast and multicast services, both within a cell, as well as within the core network. For broadcast transmission across multiple cells, it defines transmission via single-frequency network configurations. Target applications include mobile TV and radio broadcasting, as well as file delivery and emergency alerts. Evolved Multimedia Broadcast Multicast Services (eMBMS) is a corresponding broadcasting service offered via Evolved Packet Systems including E-UTRAN (LTE) and UTRAN access.

One typical use case of MBMS or eMBMS is to deliver content, such as e.g. sport game related video content, or other types of content to a large number of mobile users gathered at a specific location, such as e.g. a sports arena, a conference or fair building.

In case e.g. eMBMS is applied, the MBMS Download Delivery Method (UDP/FLUTE) may be used as protocol to deliver live TV content to user equipments (UEs). In addition, media segments according to the Hypertext Transfer Protocol (HTTP) Live Streaming (HLS) protocol or according to Dynamic Adaptive Streaming over HTTP (DASH) may be delivered as files over MBMS download as well.

Another typical use case is distribution of Android updates, where eMBMS can use the MBMS Download Delivery Method (UDP/FLUTE) as protocol to deliver popular files, such as Android update, YouTube clip preloading or major news event.

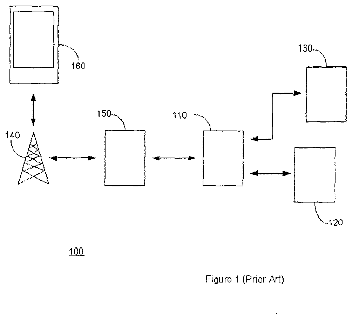

One simplified example of an MBMS or eMBMS architecture according to the prior art is illustrated in figure 1. The architecture 100 of figure 1 comprises at least one entity or network node, which may typically be a Broadcast Multicast Service Center (BM-SC) 110, which is an entity capable of providing MBMS or eMBMS functionality by distributing content provided from one or more content service providers 120, where a content service provider 120 typically comprise a content store (not shown), and a live encoder (not shown), capable of providing user content, typically referred to as content feeds e.g. in the form of satellite feeds, live feeds and/or Content Delivery Network (CDN) feeds to the BM-SC 110 under supervision of a Broadcast operations function 130, which is capable of interacting with the BM-SC 110. The BM-SC 110 is connected to an access network, typically comprising a plurality of access nodes, but for simplicity here represented by one single access node 140, e.g. in the form of an Evolved node B (eNB), connected via a Multimedia Broadcast Multicast Services Gateway (MBMS-GW) 150, or any other corresponding network node, where the access node 140 is capable of distributing the provided content feeds to UEs located within range of the access network, via unicast or multicast. For simplicity, here such UEs are represented by one single UE, UE 160.

In order to be able to remedy failure to receive broadcasted or multicasted user content correctly, by at least one of the UEs, the architecture described above is typically also provided with functionality which is configured to enable the BM-SC 110 to re-transmit parts of the user content to those UEs 160 reporting failure to receive the user content correctly. In the context of MBMS or eMBMS, such a process is typically referred to as a file repair process, or more specifically HTTP Unicast File repair. For enabling file repair, the BM-SC 110 is therefore normally provided also with at least one, but typically with a plurality of file repair servers (not shown), capable of providing lost or corrupted file fragments of the distributed user content to each requesting UE, by way of retransmission of the previously transmitted, but not correctly received user content. For eMBMS, 3GPP TS 26.346 defines a User Service Bundle Description (USD), which is used for grouping user services available via eMBMS in one or more USD instances.

A USD instance contains one or more Delivery Method descriptions, which is/are used to describe for a UE how a service is delivered to a UE. The Delivery Method description refers to a Session Description Instance, which describes the delivery related parameters that the UE need to be aware of to be able to receive transmitted user content. An Associated Delivery Procedure Description (ADPD) may also be referenced by the Delivery Method description to provide a complementary delivery method for the service, such as e.g. file repair and/or reception reporting in eMBMS. In addition, the Delivery Method description may also reference to a Security Description in order to provide for relevant service protection information.

MBMS download can be used to deliver an arbitrary number of files from a single source to many receivers. MBMS Download uses the File Transport over Unidirectional Transport (FLUTE) protocol for file delivery. FLUTE, which is further described e.g. in RFC3926, is designed to provide massive file delivery over unidirectional links, such as digital broadcast deliveries. Since HTTP and TCP are not feasible for point-to-multipoint communication, a newly developed protocol is used.

From hereinafter it is to be understood, that whenever MBMS is mentioned it is to be referred to as meaning any of MBMS or eMBMS.

After an MBMS bearer has been established, the BM-SC starts sending the actual MBMS user data. The BM-SC can send one or more files using MBMS. All files require an entry in the FLUTE FDT, which are provided using FLUTE FDT Instances.

An *Associated Delivery Procedures* (ADP) is optionally executed after the MBMS data transfer phase. Two types of associated delivery procedures are defined by the MBMS Service Layer, namely the file repair procedure ensures the reliability of transmissions. A reception reporting procedure is used to collect reception statistics. For the MBMS Download Delivery method, the reception reporting procedure is used to either report the complete reception of one or more files, or to report statistics on the stream, or to do both. For the MBMS Streaming Delivery method, the reception reporting procedure is used to report statistics on the stream.

If the BM-SC provided parameters requires reception reporting confirmation then the UEs capable of operating as MBMS receivers confirms the user content reception, while if reception reporting is requested for statistical purposes the BM-SC may specify the percentage subset of MBMS receivers it would like to perform reception reporting. However, in current MBMS solutions, associated delivery procedures for reception reporting can only be initiated subsequent to an MBMS data transmission phase. Consequently, there is no mechanism available for broadcasted sessions, provided e.g. via MBMS, for providing any feedback on an ongoing streaming session.

### Summary

It is an object of the present document to at least alleviate the problem described above.

EP 1 624 610 A1 disclose a method for controlling transmission of feedback of mobile terminals in a communications network. The method specifies, at a network node, conditions for when a mobile terminal is to report feedback back to the network.

US 2013/ 159457 A1 disclose a method for determining the number of application symbols received in a block and transmitting the result to a server, where the server can make use of the acquired result for adjusting transmission settings for additional data transmissions.

WO 2010/069372 A1 disclose a method of monitoring, at a network node, Quality of Experience, or other indicators of quality of service when delivering media data to user equipment in a telecommunications network.

US 2013/128756 A1 discloses the configuration of reporting parameters in streaming systems using threshold values.

The invention is defined by the independent claims. Embodiments of the invention are defined by the dependent claims.

### Brief description of drawings

Embodiments will now be described in more detail in relation to the accompanying drawings, in which:
Figure 1 is a system architecture of an MBMS enabled communications network, according to the prior art.
Figure 2 is a flow chart illustrating a method, executed at a network node, for providing for runtime reception reporting from a UE to the network, according to one embodiment.
Figure 3 is another flow chart illustrating a method, executed at a UE, for executing runtime reception reporting, on the basis of information provided from the network.
Figure 4 is a block scheme illustrating a first processing device, according to a first embodiment.
Figure 5 is another block scheme illustrating a first processing device, according to a second embodiment.
Figure 6 is a block scheme illustrating a second processing device, according to a first embodiment.
Figure 7 is another block scheme illustrating a second processing device, according to a second embodiment.

### Detailed description

As already mentioned above, HTTP DASH streaming is a download delivery method which is available for the eMBMS solution. For the currently available solution, there is however no runtime reception reporting procedure available for HTTP streaming status using the download delivery method. Thus an operator cannot get immediately feedback about the receiving quality at a UE and therefore cannot tune its network parameters while still receiving a HTTP streaming session.

The ability to be able to make adjustments to download delivery conditions is particularly essential during live broadcasting scenarios where possible broadcasting problems need to be handled instantly. In case downloading is executed with incorrect or non-optimal network configurations, UEs operating as eMBMS clients may lose DASH segments during certain periods and thereby, as a result end up with an unsatisfactory user experience. However in such a situation, the operator will not be able to receive any immediate feedback from any UE and therefore he will not be able to take immediate actions by tuning the network accordingly.

At least for the reason mentioned above, a method is suggested, where the operator can choose to apply runtime reception reporting, on a session by session basis. More specifically, a mechanism is suggested where the network node can provide information indicating to a UE that it shall initiate measuring of certain runtime statistics, and to report the result of such measuring to the network node when reporting is triggered at the UE, based on one or more trigger parameters provided to the UE from the network node. Thereby the operator will be able to get immediate feedback about any continuous download delivery method applied for DASH streaming. Based on such feedback, the operator will then be able to take immediate action to improve the broadcast delivery.

For this purpose a new reception report type need to be introduced. This new report type can be chosen e.g. when a download delivery method for continuous DASH streaming delivery and Quality of Experience (QoE) metrics use Loss of Objects as an input parameter.

One new reception report type need to be introduced in order to enable a network node to instruct a UE to perform such reception reporting, and can be chosen on the network side at least whenever a download delivery method for continuous DASH streaming delivery is applied. By way of example, QoE metrics using Loss of Objects may be used as basis for the reporting.

Below a method executable at a network node which provides for a provisioning at the server side of a network is described. Such a network node may, as suggested in the given example, be a BM-SC, or may be provided as a stand alone network node which is connected to, and capable of interacting with the BM-SC, or any other type of network node, which is capable of distributing broadcasted content to UEs.

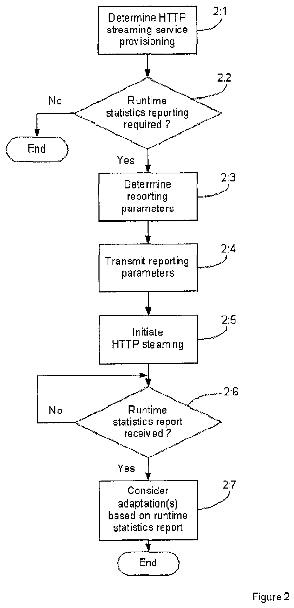

Once it has been decided at the network node, typically initiated by an operator, to provision one HTTP streaming service through a continuous file delivery broadcasting method, such as MBMS or eMBMS, in the present example via a BM-SC, a method as illustrated in figure 2 is initiated. This is indicated with a first step 2:1.However, alternatively another MBMS service layer node may instead be used for distributing continuous file delivery.

In a next step 2:2, it is determined, typically by input from the operator, whether or not a runtime statistical report is required in order to provide for streaming delivery feedback of the previously determined continuous file delivery method. Such a decision may be taken automatically, manually or in a combination thereof. An operator may e.g. choose to apply runtime statistics reporting by default for every streaming and choose to disable reporting only for those streaming sessions which are considered to be of less importance and for which it is therefore decided the this type of feedback is not needed.

In case no such reporting is required the described process is terminated, while in case reporting is required, the process continues by determining parameters to be applied in the reporting process, as indicated in a subsequent step 2:3. From herein after these parameters are to be referred to as reporting parameters and include all settings provided from the network node to the UE for the purpose of making the runtime reception reporting described herein possible from the UE. Which parameters to determine may e.g. be determined from input provided by the operator, from previously defined and stored default values, or from a combination of both. Among other issues, he report type, which in the present example is referred to as "RtStaR-all", is set at this stage.

According to one exemplary embodiment, this report type use Loss of Objects metrics as a report input. In the latter case the reporting parameters include an indication that Loss of Objects shall be measured and form basis of later reporting. In addition, a measure resolution and a measure range are preferably also determined in order to provide instructions to a UE on when, and under what conditions to measure data which can later form basis for a report. A typical measure resolution can e.g. be set to 30 seconds, while a typical measure range e.g. can be set to the whole or half the period of one broadcast session. Alternatively one or more of the mentioned parameters may be pre-set as default value/s.

When applying the suggested report type at a UE, the number of loss of objects will be summed up over each measure resolution period of the given measure range at a UE, capable of receiving a HTTP streaming service. In addition, a trigger decisive for when to generate a report at the UE need to be determined. According to one embodiment, a threshold value can be specified and provided to the UE, such that when the threshold value is reached at the receiving UE, a report is generated by the UE and provided to the network node. By way of example, a threshold value set to 15 will indicate that when the loss of objects over all received objects reach 15 % over a specified measure resolution period the UE is triggered to complete a report and to transmit it back to the
network node which originally requested such reports, thereby enabling the UE to report bad quality of an on-going session at short notice, and also enabling the network node to initiate actions on the network side and thereby allow an operator to get immediate feedback on continuous delivery status for live streaming and to react to quality deterioration in due time. Such a feature can be very important e.g. in case the streaming quality is very unsatisfactory due to a Forward Error Correction (FEC) overhead which has not been configured high enough, or due to use of a broadcast area which has been under dimensioned.

In a next step 2:4, the reporting parameters are assembled and provided to the UE, typically together with and incorporated into, a transmitted service announcement, i.e. as part of the provisioning initiated in step 2:1, thereby preparing the UE for the upcoming service, i.e. HTTP streaming reception. In the latter case the parameters are distributed in an already used message, and thus no new signalling need to be introduced for this purpose. More specifically an SDP file and an ADPD file, already used in signalling between the two mentioned entities, may be used for providing the information necessary to initiate preparations for reporting. More specifically the BM-SC generates an SDP file, which, in addition to already presently provided information, also includes the determined reporting parameters and an ADPD file, which typically includes an indication of the report type, here "RTStaR-all", as well as a selected threshold value, provided as a new "threshold" attribute, in addition to already previously provided information, such as e.g. file repair related information. Alternatively, for the purpose of maintaining backwards compatibility, in situations where no threshold attribute can be used in the ADPD, then also the threshold value and report type may instead be provided in the SDP file.

In case a net threshold attribute can be applied in the ADPD, an ADPD schema update may look as suggested below:

```
           <?xml version="1.0" encoding="UTF-8"?>
           <xs:schema
              xmlns="urn:3gpp:metadata:2005:MBMS:associatedProcedure"
              xmlns:xs="http://www.w3.org/2001/XMLSchema"
              targetNamespace="urn:3gpp:metadata:2005:MBMS:associated Procedure
           "
              elementFormDefault="qualified">
              <xs:element name="associatedProcedureDescription"
           type="associatedProcedureType"/>
              <xs:complexType name="associatedProcedureType">
                 <xs:sequence>
                     <xs:element name="postFileRepair" type="basicProcedureType"
           minOccurs="0"/>
                     <xs:element name="bmFileRepair" type="bmFileRepairType"
           minOccurs="0"/>
                     <xs:element name="postReceptionReport"
           type="reportProcedureType" min0ccurs="0"/>
                     <xs:any namespace="##other" processContents="skip"
           minOccurs="0" maxOccurs="unbounded"/>
                 </xs:sequence>
              </xs:complexType>
              <xs:complexType name="basicProcedureType">
                 <xs:sequence>
                     <xs:element name="serviceURI" type="xs:anyURI"
           maxOccurs="unbounded"/>
                 </xs:sequence>
                 <xs:attribute name="offsetTime" type="xs:unsignedLong"
           use="optional"/>
                 <xs:attribute name="randomTimePeriod" type="xs:unsignedLong"
           use="required"/>
              </xs:complexType>
              <xs:complexType name="bmFileRepairType">
                 <xs:attribute name='sessionDescriptionURI" type="xs:anyURI"
           use="required"/>
              </xs:complexType>
              <xs:complexType name="reportProcedureType">
                 <xs:complexContent>
                     <xs:extension base="basicProcedureType">
                        <xs:attribute name="samplePercentage" type="xs:decimal"
           use="optional"
                            default="100"/>
                        <xs:attribute name="forceTimeIndependence"
           type="xs:boolean" use="optional"
                            default="false"/>
                        <xs:attribute name="reportType" type="xs:string"
           use="optional"/>
                    <xs:attribute name="threshold" type=" xs:decimal" use="optional"/>
                     </xs:extension>
                 </xs:complexContent>
              </xs:complexType>
           </xs:schema>
           "reportType" value = "RAck" || "StaR" || "StaR-all" || "StaR-only"|| "RtStaR-
           all"
```

As stated in the schema, one new reportType "RtStaR-al"I has been introduced for identifying a request for runtime statistic reporting to a receiving UE. In our example, a new attribute threshold is also introduced in "reportProcedureType" if the reportType is set to "RtStaR-all". If the suggested schema is set as indicated above, and if the percentage of loss of objects exceeds the threshold value provided as the specified "threshold" value, the UE will need to take the obtained parameters into consideration, apply the suggested method and determine if immediately reception reporting is needed. As indicated in the schema, the report type and threshold values are indicated as optional input parameters, which will only be considered by UEs adapted to handle such information accordingly. Conditions for handling such information at a UE will be more apparent below.

Alternatively, the threshold value can be defined in 3GPP-QoE-Metrics if a threshold attribute cannot be applied in the ADPD. A new attribute: Measure-Threshold can in such a case instead be added to the other relevant 3GPP-QoE-Methrics in a SDP file, e.g. given as:
"Measure-Threshold = "Threshold" "=" 1^{∗}DIGIT".

As indicated in a next step 2:5, the required HTTP streaming can commence, since provisioning has now been executed at the server side. At the network side runtime statistics reports can now be received and handled accordingly. This is indicated with the loop, denoted step 2:6. Once a report has been received from the UE, any available adaptation of the operation of the broadcasting network which can be used for trying to improve the performance can be considered or initiated by the network node, based on the content of the runtime statistics report. The latter step is indicated in step 2:7. It is to be understood that the process described in fig. 2 is executed as long as given parameters has indicated reporting to commence, and that, once such a time limit has terminated, also the described process is terminated, and may be reinitiated by repeating the process once again.

It is also to be understood, that, although, fig. 2 describe a process executed between one network node and one UE, a typical scenario is that the network node receives reports from a plurality of UEs and thus, the network node takes action after having consolidated the content of a plurality of reports, received from a plurality of UEs. In other words, the method and process described above is typically executed in parallel between a network node and a plurality of UEs.

According to one embodiment, an increase of the presently applied FEC overhead percentage is considered at the network node, in order to increase the reception quality based on the content of received reports. This approach may be especially beneficial e.g. in a situation where bad quality has been reported from most of the broadcast service areas of a broadcasting network.

According to another embodiment, an increase in the applied service area is considered at the network node, e.g. in case most of the reception reporting is associated with the edge of a broadcast service area. The fact that the reporting is associated with the edge of the broadcast service area can be determined e.g. from location information, indicating the location of the UE, which information, according to one alternative embodiment, may be provided in a reception report as well.

According to yet another embodiment an update of the RAN configuration presently applied by the network is considered at the network node, in order to use more optimized radio settings for on-going sessions. Such configuration update may typically include Modulation and Coding Scheme (MCS) and Multiple Service Provider (MSP) updates.

It is to be understood that the scope of this disclosure is to suggest a mechanism for providing for runtime reception reporting, i.e. for allowing a network node to inform a UE to initiate such reporting and to provide parameters necessary for initiation of such reporting. Apart from the given examples, the way this information is actually used for adapting the network is out of the scope of this disclosure, especially since numerous ways of adapting a network is already well known to the skilled person, while ways of initiating such an activity, given the present circumstances, are so far not disclosed

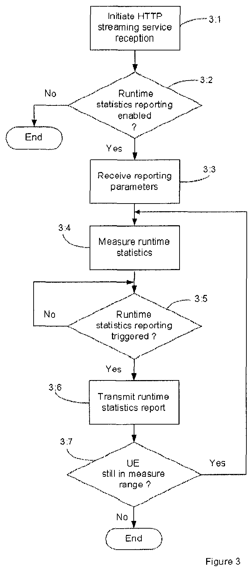

Figure 3 is another figure in which a method to be executed in a UE, which may typically be a mobile device, such as e.g. a mobile telephone, a PAD or a laptop, a stationary devices, such as e.g. a PC or a TV set, or any other type of device which is capable of receiving a HTTP streaming service transmitted from a network node via broadcast as described above, is disclosed.

In a first step 3:1, the UE initiates a HTTP streaming service reception, after first having received an USD for a specific HTTP streaming service. In a next step 3:2, the UE determines if runtime statistics reporting has been enabled by a network node, such as the one described above, e.g. from interpreting content received in an ADPD file and/or a SDP file. If this is not the case the process is terminated. If however information indicative of such reporting is identified by the UE, the process continues by receiving reporting parameters, specifying how to execute the reporting, as indicated with step 3:3.

Typically these parameters are received in the same file(s) as indicated above. As already mentioned above for the network node, the reporting parameters may typically comprise a specified measure resolution and measure range, which may be received e.g. in an SDP file, while an indication of the report type, here "RTStaR-all" and aselected threshold value may be provided in an ADPD file or SDP file. Based on the reporting parameters the UE then starts to measure runtime statistics as specified, as indicated in step 3:4, e.g. by measuring loss of objects according to a given measure resolution and measure range.

As indicated in the specification 3GPP 26.346 "3^{rd} Generation Partnership Project; Technical Specification Group Services and System Aspects; Multimedia Broadcast/Multicast Service (MBMS); Protocols and codecs" (Rel-9), measure resolution is defined as the time over which each metric value is calculated; splits a session duration into a number of equally sized periods, where each period is of the length specified by the "measure-resolution" field, while measure range define the time range in the stream for which QoE metrics will be reported.

Once runtime statistics reporting has been triggered at the UE, as indicated in the loop, referred to as 3:5 in figure 3, relevant measured statistics is assembled and provided to the network node which originally requested reporting in a report.

Such a providing step is indicated as step 3:6 in figure 3. In a next step 3:7 it is determined, based on the previously received reporting parameters, if the UE is supposed to continue to measure runtime statistics and if this is the case, the process is repeated, continuing from step 3:4.

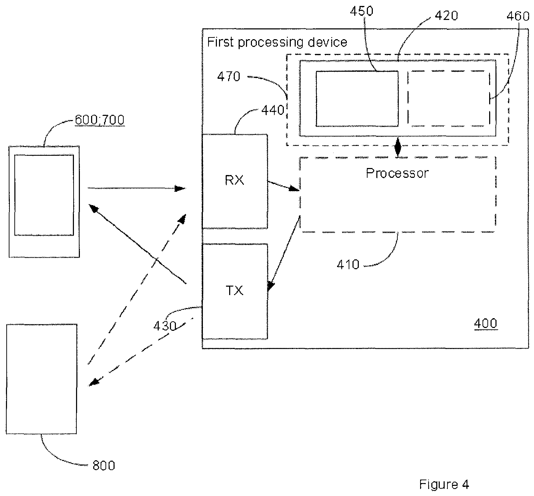

A possible configuration of a processing device, from hereinafter referred to as a first processing device, which is forming part of a network node capable of providing for use of runtime reception reporting, as suggested above, according to one embodiment, will now be described in further detail below with reference to figure 4. As already mentioned above, such a network node may e.g. be a BM-SC adapted to provide for the reporting mechanism as described above, or a separate network node, which is connected to, and configured to interact with a BM-SC, or any other type of network node which is capable of providing corresponding functionality to the communication network.

The first processing device 400 comprises a processor 410, and a memory 420 capable of storing computer readable instructions 450 which when executed by the processor 410 causes the processing device 400 to determine that runtime reception reporting is required from a UE 600, 700 for a specific HTTP streaming service, typically by receiving input from the operator responsible for the respective streaming session. Such instructions also causes the first processing device to determine which reporting parameters to be applicable for the runtime reception reporting, which determination may be executed either by applying parameters set by default, or by adapting parameters for the respective session, and provide the determined reporting parameters to the UE 600,700, by transmitting them via a transmitting unit, TX 430.

The memory 420 typically also comprise computer readable instructions which when executed by the processor 410 causes the first processing device 400 to determine relevant reporting parameters, comprising a threshold value, indicating to the UE 600 under which conditions to trigger transmission of a runtime reception report.

The memory 420 may also comprise computer readable instructions which when executed by the processor 410 causes the first processing device 400 to execute the providing step in association with provisioning the HTTP streaming service, i.e. at the same time as executing a conventional provisioning process. In such a scenario, the UE is provided with information indicating that runtime reception reporting is to be applied for the respective service, and also with information indicative of the necessary reporting parameters to be applied for the reporting.

According to one embodiment, the memory 420 may comprise computer readable instructions which when executed by the processor 410 causes the first processing device 400 to provide at least some of the reporting parameters in an SDP file, while information indicative of at least one of the runtime reception report type and the applicable threshold value is provided in an ADPD file. Alternatively, e.g. if it is not possible to apply a new threshold attribute in the ADPD, the threshold attribute may instead be provided in a SPD file.

Once the indication to apply runtime reception reporting has been provided to a UE 600, 700, as indicated above, computer readable instructions contained in the memory 420 may, when executed by the processor 410, cause the processing device 400 to receive a runtime reception report transmitted from the UE 600, and allowing the first processing device 400 to consider or initiate at least one transmission related amendment associated with the ongoing HTTP streaming service, dependent on content of the received runtime reception report. The latter process may imply to make one or more adjustments, not only to the network node on which the first processing device 400 resides, but also to other functionality of the communication network which may be involved in the transmission of the relevant streaming session. For that purpose, the computer readable instructions may include also routines for how to interact with various functionality of the communication network e.g. for collecting or exchanging parameters and measuring values for evaluation, together with the information provided in a runtime reception report, and also for interacting with the operator, e.g. in case a semi-automatic process is used. However, since such interaction is commonly applied between network nodes of various communication networks, such details are out of the scope of this document.

In the latter case the operator may be provided with certain measured metrics, on the basis of which the operator can later make a decision to make adjustments and thereby making an attempt to improve conditions for an ongoing streaming session at relatively short notice.

Alternatively, the memory 420 may be arranged as a computer program product 470, which comprises computer readable medium and a computer program 450, comprising executable, computer readable means, here in the form of instructions, which when executed by the processor causes the first processing device to operate as described above, with reference to figure 3. The compute program product 470 may be arranged in the form of a non- volatile or volatile memory, such as e.g. an Electrically Erasable Programmable Read-Only Memory (EEPROM), a flash memory, a Random Access Memory (RAM) or a disc drive, but not in the form of a signal or any form of electromagnetic wave. The computer program product 470 may also comprise persistent storage 460, which e.g. may be any single one or combination of: magnetic memory, optical memory, solid state memory, or even remotely mounted memory.

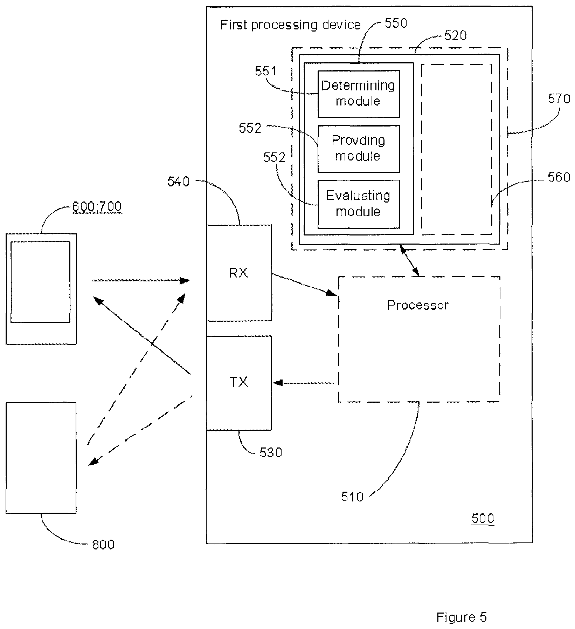

As illustrated in figure 5, a first processing device 500 which can form part of a network node may instead be described as comprising a processing unit 510, a memory 520 capable of storing computer readable instructions 550, which correspond to the ones described above with reference to figure 4, a transmitting unit 530, a receiving unit 540 operatively connected with the processor 510 in order to allow execution of functionality which corresponds to the functionality as described above with reference to figure 4 and a plurality of interacting modules. The processor 510 of figure 5 comprise a number of operatively connected modules, here exemplified with a module, referred to as a determining module 551, configured to determine when to apply runtime reception reporting for a specific session and also, in case of applying reporting, of determining relevant reporting parameters to be applied for the session. The determining module 551 is operatively connected to a providing module 552, configured to assemble the reporting parameters accordingly and provide the relevant information to a respective UE via a transmitting unit 530. The providing module 552 may also be connected to a user interface (not shown) e.g. in case an operator shall be able to manually trigger transmission and/or specify reporting parameters to be applied in the reporting. The first processing device 500 also comprises a module, here referred to as an evaluating module 552, for evaluating possible amendments and/or adjustments of the communication network on the basis of the information provided in a runtime reception report, via the receiving unit 540. Possibly the evaluating unit 552 is configured to make the mentioned evaluations in combination with other input associated with the network performance, which may be accessible from appropriate functionality 800 by interacting which such functionality via the transmitting unit 530 and the receiving unit 540. The memory 520 may e.g. comprise default reporting parameters, as well as updated information required by the evaluating module 552.

Similar to the embodiment described above, with reference to fig. 4, the memory 520 may be arranged as a computer program product 570, which comprises computer readable medium and a computer program 550, comprising executable, computer readable means, here in the form of instructions, which when executed by the processor causes the processing device to operate as described above, with reference to figure 4. The compute program product 570 may be arranged in the form of a non- volatile or volatile memory, such as e.g. an Electrically Erasable Programmable Read-Only Memory (EEPROM), a flash memory, a Random Access Memory (RAM) or a disc drive, but not in the form of a signal or any form of electromagnetic wave. The computer program product 570 may also comprise persistent storage 560, which e.g. may be any single one or combination of: magnetic memory, optical memory, solid state memory, or even remotely mounted memory.

According to yet another alternative embodiment processor 510 may configured as a number of suitable integrated circuits, capable of interacting in a way which corresponds to the interacting modules described above, and may be arranged e.g. as an Application Specific Integrated Circuit) ASIC, or any other type of available electronic configuration. Alternatively, a processor configuration may constitute a combination of software and hardware implemented units and modules.

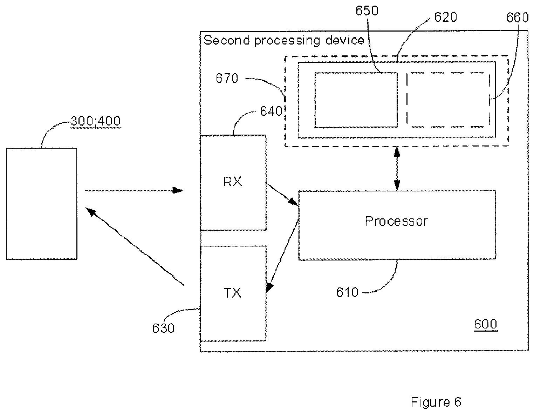

A processing device 600, which is suitable for implementation in a UE, according to one embodiment, which processing device is capable of applying runtime reception reporting according to information provided from a network node as suggested above will now be described in further detail below with reference to figure 6.

As indicated in figure 6, a second processing device 600, which is typically forming part of a UE, capable of receiving HTTP streaming services from a network node via broadcasting, e.g. via MBMS or eMBMS, comprise a processor 610 and a memory 620, storing computer readable instructions which when executed by the processor 610 causes the second processing device 600 to: determine that runtime reception reporting has been enabled by a network node providing a determined HTTP streaming service, by receiving information, indicating that reporting is to be applied, and reporting parameters, from a network node, via a receiving unit 640; measure runtime statistics on the basis of the determined reporting parameters, and report measured runtime statistics via a transmitting unit 630, upon recognising a reporting trigger, e.g. metrics exceeding a given threshold value.

As already mentioned above, Loss of Objects metric may be used as reporting input in combination with a threshold value indicating a certain percentage of loss of objects over
all received objects. In such a situation the memory may further comprise instructions which when executed by the processor causes the UE to provide a runtime reception report and transmit the report to a network node when the percentage of loss of objects exceeds the threshold value. Information on what metrics to measure may be provided in an SDP file.

The memory 620 may comprise computer readable instructions which when executed by the processor 610 causes the second processing device 600 to receive the reporting parameters in association with receiving a provisioning of the HTTP streaming service from the network node, i.e. in addition to receiving information on a conventional provisioning, the second processing device 600, also receive information on possible enablement of runtime reception reporting as described herein.

The second processing device 600 may receive reporting parameters in different ways. According to one embodiment, the memory comprise computer readable instructions which when executed by the processor 610 causes the second processing device 600 to receive at least some of the metrics in an SDP file, together with information normally provided to the second processing device 600 in an SDP file.

If applicable, the memory 620 may comprise computer readable instructions which when executed by the processor 610 causes the second processing device 600 to receive reporting parameters indicative of at least one of the runtime reception report type and the threshold in an ADPD file, together with information normally provided in an ADPD file.

Although the processors described in the different embodiments herein are presented as one single processor, the processor may be one single Central Processing Unit (CPU) or may comprise a plurality of interacting processors. In a corresponding way, the processing units may be provided as one or a plurality of interacting processing units.

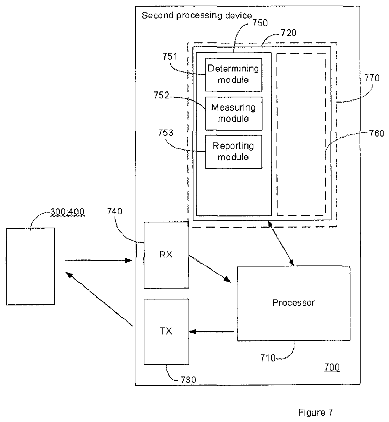

As indicated with figure 7, a second processing device configured to form part of a UE may alternatively be described as comprising a processor 710, a memory 720 comprising computer readable instructions 750, a transmitting unit 730 and a receiving unit 740, each of which is operatively connected with the processor 710 in order to be able to execute functionality which corresponds to the method steps as described above with reference to figure 3. The processor 710 of figure 7 comprises a number of operatively connected modules, which are configured to operate in accordance with the embodiment described above with reference to figure 6. More specifically, the second processing device 700 comprises a module, here referred to as a determining module 751, configured to determine, based on information received from a network node, if runtime reception reporting is to be applied for a specific session and also, in case of applying such reporting, of determining which reporting parameters to apply. The determining module 751 is operatively connected to the receiving unit 730 so that the second processing device 700 can receive reporting information, including parameters from a network node. The second processing device 700 also comprises a measuring module 752, configured to measure runtime statistics on the basis of the determined reporting parameters. Furthermore, the second processing device 700 comprises a module, here referred to as a reporting module753, which is configured to assemble measured data and provide the assembled data to the network node originally requesting the reporting, or any other destination which the processing device may have been instructed to send the report to.

Any of the second processing device 600, 700 may also comprise a computer program product 670, 770 which comprises computer readable medium and a computer program 650,750, comprising computer readable instructions which when executed by the processor 610, 710 causes the second processing device 600,700 to operate as described above, with reference to figure 6 or 7 respectively. The compute program product 670, 770 may be arranged in the form of a non- volatile or volatile memory, such as e.g. an Electrically Erasable Programmable Read-Only Memory (EEPROM), a flash memory, a Random Access Memory (RAM) or a disc drive, but not in the form of a signal or any form of electromagnetic wave. The computer program product 670, 770 may also comprise persistent storage 660, 760, which e.g. may be any single one or combination of: magnetic memory, optical memory, solid state memory, or even remotely mounted memory.

Alternatively, the processor 71 0 may be configured by suitable integrated circuits, and may e.g. be arranged e.g. as an Application Specific Integrated Circuit) ASIC, or any other type of available electronic configuration, or be arranged as a combination of interacting software modules and hardware units, which are configured to provide functionality as described in any of the embodiments described above with reference to fig. 6 or 7.

It is to be understood that the choice of interacting units, as well as the naming of the units within this disclosure are only for exemplifying purpose, and that nodes suitable to execute any of the methods described above may be configured in a plurality of alternative ways in order to be able to execute the suggested procedure actions.

It should be noted that the arrangements as described with reference to any of figure 4-7 merely illustrate various functional units in a logical sense. The functions in practice may be implemented using any suitable software and hardware means/circuits. Thus, the embodiments are generally not limited to the structures as described herein.

While this document disclose several alternative embodiments, it is contemplated that alternatives, modifications, permutations and equivalents thereof will become apparent upon reading of the specifications and study of the drawings. The invention is defined by the claims.

## Claims

1. A method executed on a network node for providing a HTTP streaming service to a user equipment via broadcasting or multicasting, comprising the steps of:
- determining (2:2) under which conditions runtime reception reporting is required from a specific user equipment receiving a determined HTTP streaming service;
- determining (2:3) reporting parameters, including a threshold value, to be applicable at the user equipment for determining, at the user equipment, when to trigger the runtime reception reporting, wherein the runtime reception reporting is based on Loss of Objects metrics indicated in the reporting parameters, and the threshold value is set as a percentage of loss of objects over all objects of the HTTP streaming service received by the user equipment, such that transmission of a runtime reception report from the user equipment is triggered when the percentage of loss of objects exceeds the threshold value, and
- providing (2:4) the determined reporting parameters to the user equipment.

2. The method according to any of claim 1, wherein the providing step (1:4) is executed in association with provisioning the HTTP streaming service.

3. The method according to any of the preceding claims, wherein the at least one amendment comprise one or more of:
- increasing the FEC overhead percentage applied for the ongoing HTTP streaming service;
- increasing the service area applied for the ongoing HTTP streaming service, and
- updating the RAN configuration by optimized radio settings applied for the ongoing HTTP streaming service.

4. A first processing device (400) for providing a HTTP streaming service from the first processing device (400) to a user equipment (600,700) via broadcasting or multicasting the first processing device (400) being configured to:
- determine under which conditions runtime reception reporting is required from a specific user equipment receiving a determined HTTP streaming service;
- determine reporting parameters, including a threshold value, to be applicable at the user equipment for determining, at the user equipment, when to trigger the runtime reception reporting, wherein the runtime reception reporting is based on Loss of Objects metrics indicated in the reporting parameters, and the threshold value is set as a percentage of loss of objects over all objects of the HTTP streaming service received by the user equipment, such that transmission of a runtime reception report from the user equipment is triggered when the percentage of loss of objects exceeds the threshold value; and
- provide the determined reporting parameters to the user equipment.

5. The first processing device (400) according to claim 4, being configured to execute the providing step in association with provisioning the HTTP streaming service.

6. The first processing device (400) according to any of claims 4-5 being configured to:
- receive a runtime reception report from the user equipment (600.700), and
- consider at least one transmission related amendment associated with the ongoing HTTP streaming service at least partly on the basis of content of the received runtime reception report.

7. The first processing device (400) according to claim 6, being configured to consider at least one of the transmission related amendments by considering at least one of:
- increasing the FEC overhead percentage applied for the ongoing HTTP streaming service;
- increasing the service area applied for the ongoing HTTP streaming service, and
- updating the RAN configuration by optimized radio settings applied for the ongoing HTTP streaming service.

8. The first processing device (400) according to any of claims 4-7 wherein the first processing device (400) is forming part of or is connected to a BM-SC.

9. A computer program (450) comprising computer readable instructions which, when executed on a network node causes the network node to:
- determine under which conditions runtime reception reporting is required from a specific user equipment receiving a determined HTTP streaming service,
- determine reporting parameters, including a threshold value, to be applicable at the user equipment for determining, at the user equipment, when to trigger the runtime reception reporting, wherein the runtime reception reporting is based on Loss of Objects metrics indicated in the reporting parameters, and the threshold value is set as a percentage of loss of objects over all objects of the HTTP streaming service received by the user equipment, such that transmission of a runtime reception report from the user equipment is triggered when the percentage of loss of objects exceeds the threshold value, and
- provide the determined reporting parameters to the user equipment.

10. A computer program product (470) comprising a computer program (450) according to claim 9 and a computer readable means on which the computer program (450) is stored.

11. A method executed on a user equipment for receiving a HTTP streaming service from a network node via broadcasting or multicasting, comprising the steps of:
- determining (3:2) that runtime reception reporting has been enabled by a network node providing a determined HTTP streaming service;
- receiving (3:3) reporting parameters decisive of under which conditions runtime reception reporting is to be executed by the user equipment;
- measuring (3:4) runtime statistics on the basis of at least some of the determined reporting parameters; and
- transmitting (3:6) measured runtime statistics to the network node upon recognising (3:5) a reporting trigger, triggered based on a threshold value, comprised in the reporting parameters, wherein Loss of Objects metric are used as reporting input, and the threshold value is given as a percentage of loss of objects over all received objects of the HTTP streaming service, such that transmission of a runtime reception report is triggered when the percentage of loss of objects exceeds the threshold value.

12. The method according to claim 11, wherein the reporting parameters include at least one of: a measure resolution period and a measuring range.

13. A second processing device (600) for receiving a HTTP streaming service from a network node (300,400) via broadcasting or multicasting, the second processing device (600) being configured to:
- determine that runtime reception reporting has been enabled by a network node providing a determined HTTP streaming service;
- receive reporting parameters decisive of under which conditions runtime reception reporting is to be executed by the second processing device;
- measure runtime statistics on the basis of at least some of the determined reporting parameters;
- report measured runtime statistics upon recognising a reporting trigger, triggered based on a threshold value, comprised in the reporting parameters, wherein Loss of Objects metric is used as a reporting input and the threshold value indicates a percentage of loss of objects over all received objects of the HTTP streaming service; and
- provide a runtime reception report and transmit the report to a network node(300,400) when the percentage of loss of objects exceeds the threshold value.

14. The second processing device (600) according to claim 13, being configured to receive the reporting parameters in association with receiving a provisioning of the HTTP streaming service from the network node (300,400).

15. The second processing device according to any of claims 13-14, wherein the second processing device form part of a user equipment.

16. A computer program (650) comprising computer readable instructions which, when executed on a user equipment causes the user equipment to:
- determine that runtime reception reporting has been enabled by a network node providing a determined HTTP streaming service;
- receive reporting parameters decisive of under which conditions runtime reception reporting is to be executed by the user equipment;
- measure runtime statistics on the basis of at least some of the determined reporting parameters;
- report measured runtime statistics upon recognising a reporting trigger, triggered based on a threshold value, comprised in the reporting parameters, wherein Loss of Objects metric is used as a reporting input and the threshold value indicates a percentage of loss of objects over all received objects of the HTTP streaming service; and
- provide a runtime reception report and transmit the report to a network node when the percentage of loss of objects exceeds the threshold value.

17. A computer program product (620a) comprising a computer program (650) according to claim 16 and a computer readable means on which the computer program (650) is stored.

## Patentansprüche

1. Verfahren, das auf einem Netzknoten ausgeführt wird, um einer Benutzereinrichtung über Broadcasting oder Multicasting einen HTTP-Streaming-Dienst bereitzustellen, umfassend die folgenden Schritte:
- Bestimmen (2:2), unter welchen Bedingungen Laufzeit-Empfangsberichterstattung von einer spezifischen Benutzereinrichtung, die einen bestimmten HTTP-Streaming-Dienst empfängt, erforderlich ist;
- Bestimmen (2:3) von Berichterstattungsparametern, einschließlich eines Schwellenwerts, der an der Benutzereinrichtung anwendbar ist, um an der Benutzereinrichtung zu bestimmen, wann die Laufzeit-Empfangsberichterstattung ausgelöst werden soll, wobei die Laufzeit-Empfangsberichterstattung auf den in den Berichterstattungsparametern angegebenen Objektverlustmetriken basiert und der Schwellenwert als Prozentsatz des Objektverlusts über alle Objekte des von der Benutzereinrichtung empfangenen HTTP-Streaming-Dienstes eingestellt ist, sodass das Übertragen eines Laufzeit-Empfangsberichts von der Benutzereinrichtung ausgelöst wird, wenn der Prozentsatz des Objektverlustes den Schwellenwert überschreitet, und
- Bereitstellen (2:4) der bestimmten Berichterstattungsparameter an die Benutzereinrichtung.

2. Verfahren nach einem der Ansprüche 1, wobei der Bereitstellungsschritt (1:4) in Verbindung mit der Bereitstellung des HTTP-Streaming-Dienstes ausgeführt wird.

3. Verfahren nach einem der vorhergehenden Ansprüche, wobei die mindestens eine Änderung eines oder mehrere der Folgenden umfasst:
- Erhöhen des FEC-Overhead-Prozentsatzes für den laufenden HTTP-Streaming-Dienst;
- Erhöhen des Dienstbereichs, der für den laufenden HTTP-Streaming-Dienst angewendet wird, und
- Aktualisieren der RAN-Konfiguration durch optimierte Funkeinstellungen, die für den laufenden HTTP-Streaming-Dienst angewendet werden.

4. Erste Verarbeitungsvorrichtung (400) zum Bereitstellen eines HTTP-Streaming-Dienstes von der ersten Verarbeitungsvorrichtung (400) zu einer Benutzereinrichtung (600, 700) durch Broadcasting oder Multicasting, wobei die erste Verarbeitungsvorrichtung (400) konfiguriert ist zum:
- Bestimmen, unter welchen Bedingungen Laufzeit-Empfangsberichterstattung von einer bestimmten Benutzereinrichtung, die einen bestimmten HTTP-Streaming-Dienst empfängt, erforderlich ist;
- Bestimmen von Berichterstattungsparametern, einschließlich eines Schwellenwerts, der an der Benutzereinrichtung anwendbar ist, um an der Benutzereinrichtung zu bestimmen, wann die Laufzeit-Empfangsberichterstattung ausgelöst werden soll, wobei die Laufzeit-Empfangsberichterstattung auf den in den Berichterstattungsparametern angegebenen Objektverlustmetriken basiert und der Schwellenwert als Prozentsatz des Objektverlusts über alle Objekte des von der Benutzereinrichtung empfangenen HTTP-Streaming-Dienstes eingestellt ist, sodass das Übertragen eines Laufzeit-Empfangsberichts von der Benutzereinrichtung ausgelöst wird, wenn der Prozentsatz des Objektverlustes den Schwellenwert überschreitet; und
- Bereitstellen der bestimmten Berichterstattungsparameter an die Benutzereinrichtung.

5. Erste Verarbeitungsvorrichtung (400) nach Anspruch 4, die zum Ausführen des Bereitstellungsschritts in Verbindung mit dem Bereitstellen des HTTP-Streaming-Dienstes konfiguriert ist.

6. Erste Verarbeitungsvorrichtung (400) nach einem der Ansprüche 4 bis 5, die konfiguriert ist zum:
- Empfangen eines Laufzeit-Empfangsberichts von der Benutzereinrichtung (600, 700) und
- Berücksichtigen mindestens einer übertragungsbezogenen Änderung in Verbindung mit dem laufenden HTTP-Streaming-Dienst, die zumindest teilweise basierend auf dem Inhalt des empfangenen Laufzeit-Empfangsberichts erfolgt.

7. Erste Verarbeitungsvorrichtung (400) nach Anspruch 6, die dazu konfiguriert ist, mindestens eine der übertragungsbezogenen Änderungen durch Berücksichtigung mindestens eines der Folgenden zu berücksichtigen:
- Erhöhen des FEC-Overhead-Prozentsatzes für den laufenden HTTP-Streaming-Dienst;
- Erhöhen des Dienstbereichs, der für den laufenden HTTP-Streaming-Dienst angewendet wird, und
- Aktualisieren der RAN-Konfiguration durch optimierte Funkeinstellungen, die für den laufenden HTTP-Streaming-Dienst angewendet werden.

8. Erste Verarbeitungsvorrichtung (400) nach einem der Ansprüche 4-7, wobei die erste Verarbeitungsvorrichtung (400) einen Teil eines BM-SC bildet oder mit diesem verbunden ist.

9. Computerprogramm (450), umfassend computerlesbare Anweisungen, die, wenn sie auf einem Netzknoten ausgeführt werden, den Netzknoten veranlassen zum:
- Bestimmen, unter welchen Bedingungen Laufzeit-Empfangsberichterstattung von einer spezifischen Benutzereinrichtung, die einen bestimmten HTTP-Streaming-Dienst empfängt, erforderlich ist,
- Bestimmen von Berichterstattungsparametern, einschließlich eines Schwellenwerts, der an der Benutzereinrichtung anwendbar ist, um an der Benutzereinrichtung zu bestimmen, wann die Laufzeit-Empfangsberichterstattung ausgelöst werden soll, wobei die Laufzeit-Empfangsberichterstattung auf den in den Berichterstattungsparametern angegebenen Objektverlustmetriken basiert und der Schwellenwert als Prozentsatz des Objektverlusts über alle Objekte des von den Benutzereinrichtung empfangenen HTTP-Streaming-Dienstes eingestellt ist, sodass das Übertragen eines Laufzeit-Empfangsberichts von der Benutzereinrichtung ausgelöst wird, wenn der Prozentsatz des Objektverlustes den Schwellenwert überschreitet, und
- Bereitstellen der bestimmten Berichterstattungsparameter an die Benutzereinrichtung.

10. Computerprogrammprodukt (470), umfassend ein Computerprogramm (450) nach Anspruch 9 und ein computerlesbares Mittel, auf dem das Computerprogramm (450) gespeichert ist.

11. Verfahren, das auf einer Benutzereinrichtung ausgeführt wird, um von einem Netzknoten über Broadcasting oder Multicasting einen HTTP-Streaming-Dienst zu empfangen, umfassend die folgenden Schritte:
- Bestimmen (3:2), dass die Laufzeit-Empfangsberichterstattung durch einen Netzknoten aktiviert wurde, der einen bestimmten HTTP-Streaming-Dienst bereitstellt;
- Empfangen (3:3) von Berichterstattungsparametern, die darüber entscheiden, unter welchen Bedingungen Laufzeit-Empfangsberichterstattung durch die Benutzereinrichtung ausgeführt werden soll;
- Messen (3:4) von Laufzeit-Statistiken basierend auf mindestens einigen der bestimmten Berichterstattungsparameter; und
- Übertragen (3:6) einer gemessenen Laufzeit-Statistik an den Netzknoten beim Erkennen (3:5) eines Berichterstattungsauslösers, der basierend auf einem Schwellenwert ausgelöst wird und in den Berichtsparametern enthalten ist, wobei die Objektverlustmetrik als Berichterstattungseingabe verwendet wird und der Schwellenwert als Prozentsatz des Objektverlusts über alle empfangenen Objekte des HTTP-Streaming-Dienstes angegeben wird, sodass die Übertragung eines Laufzeit-Empfangsberichts ausgelöst wird, wenn der Prozentsatz des Objektverlustes den Schwellenwert überschreitet.

12. Verfahren nach Anspruch 11, wobei die Berichterstattungsparameter mindestens eines der Folgenden einschließen: einen Messauflösungszeitraum und einen Messbereich.

13. Zweite Verarbeitungsvorrichtung (600) zum Empfangen eines HTTP-Streaming-Dienstes von einem Netzknoten (300, 400) über Broadcasting oder Multicasting, wobei die erste Verarbeitungsvorrichtung (600) konfiguriert ist zum:
- Bestimmen, dass Laufzeit-Empfangsberichterstattung durch einen Netzknoten aktiviert wurde, der einen bestimmten HTTP-Streaming-Dienst bereitstellt;
- Empfangen von Berichterstattungsparametern, die darüber entscheiden, unter welchen Bedingungen Laufzeit-Empfangsberichterstattung durch die zweite Verarbeitungsvorrichtung ausgeführt werden soll;
- Messen von Laufzeit-Statistiken basierend auf mindestens einigen der bestimmten Berichterstattungsparameter;
- Berichten von gemessenen Laufzeit-Statistiken nach dem Erkennen eines Berichterstattungsauslösers, ausgelöst basierend auf einem Schwellenwert, der in den Berichterstattungsparametern enthalten ist, wobei die Objektverlustmetrik als Berichterstattungseingabe verwendet wird und der Schwellenwert einen Prozentsatz des Objektverlusts über alle empfangenen Objekte des HTTP-Streaming-Dienstes angibt; und
- Bereitstellen eines Laufzeit-Empfangsberichts und Übertragen des Berichts an einen Netzknoten (300, 400), wenn der Prozentsatz des Objektverlusts den Schwellenwert überschreitet.

14. Zweite Verarbeitungsvorrichtung (600) nach Anspruch 13, die zum Empfangen der Berichterstattungsparameter in Verbindung mit dem Empfangen einer Bereitstellung des HTTP-Streaming-Dienstes von dem Netzknoten (300, 400) konfiguriert ist.

15. Zweite Verarbeitungsvorrichtung nach einem der Ansprüche 13 bis 14, wobei die zweite Verarbeitungsvorrichtung Teil einer Benutzereinrichtung ist.

16. Computerprogramm (650), umfassend computerlesbare Anweisungen, die, wenn sie auf einer Benutzereinrichtung ausgeführt werden, die Benutzereinrichtung veranlasst zum:
- Bestimmen, dass Laufzeit-Empfangsberichterstattung durch einen Netzknoten aktiviert wurde, der einen bestimmten HTTP-Streaming-Dienst bereitstellt;
- Empfangen von Berichterstattungsparametern, die darüber entscheiden, unter welchen Bedingungen Laufzeit-Empfangsberichterstattung durch die Benutzereinrichtung ausgeführt werden soll;
- Messen von Laufzeit-Statistiken basierend auf mindestens einigen der bestimmten Berichterstattungsparameter;
- Berichten von gemessenen Laufzeit-Statistiken nach dem Erkennen eines Berichterstattungsauslösers, ausgelöst basierend auf einem Schwellenwert, der in den Berichterstattungsparametern enthalten ist, wobei die Objektverlustmetrik als Berichterstattungseingabe verwendet wird und der Schwellenwert einen Prozentsatz des Objektverlusts über alle empfangenen Objekte des HTTP-Streaming-Dienstes angibt; und
- Bereitstellen eines Laufzeit-Empfangsberichts und Übertragen des Berichts an einen Netzknoten, wenn der Prozentsatz des Objektverlusts den Schwellenwert überschreitet.

17. Computerprogrammprodukt (620a), umfassend ein Computerprogramm (650) nach Anspruch 16 und ein computerlesbares Mittel, auf dem das Computerprogramm (650) gespeichert ist.

## Revendications

1. Procédé exécuté sur un noeud de réseau pour fournir un service de diffusion en flux HTTP à un équipement utilisateur via une diffusion ou une multidiffusion, comprenant les étapes consistant à :
- déterminer (2:2) dans quelles conditions un rapport de réception de temps d'exécution est requis de la part d'un équipement utilisateur spécifique recevant un service de diffusion en flux HTTP déterminé ;
- déterminer (2:3) des paramètres de rapport, incluant une valeur seuil, destinés à être applicables au niveau de l'équipement utilisateur pour déterminer, au niveau de l'équipement utilisateur, quand il faut déclencher le rapport de réception de temps d'exécution, dans lequel le rapport de réception de temps d'exécution est basé sur des métriques de perte d'objets indiquées dans les paramètres de rapport, et la valeur seuil est établie en tant que pourcentage de perte d'objets sur tous les objets du service de diffusion en flux HTTP reçus par l'équipement utilisateur, de telle sorte que la transmission d'un rapport de réception de temps d'exécution depuis l'équipement utilisateur est déclenchée lorsque le pourcentage de perte d'objets dépasse la valeur seuil, et
- fournir (2:4) des paramètres de rapport déterminés à l'équipement utilisateur.

2. Procédé selon l'une quelconque parmi la revendication 1, dans lequel l'étape de fourniture (1:4) est exécutée en association avec la fourniture du service de diffusion en flux HTTP.

3. Procédé selon l'une quelconque des revendications précédentes, dans lequel l'au moins un
amendement comprend un ou plusieurs parmi :
- une augmentation du pourcentage de temps système FEC appliqué pour le service de diffusion en flux HTTP en cours ;
- une augmentation de la zone de service appliquée pour le service de diffusion en flux HTTP en cours, et
- une mise à jour de la configuration RAN par des réglages radio optimisés appliqués pour le service de diffusion en flux HTTP en cours.

4. Premier dispositif de traitement (400) pour fournir un service de diffusion en flux HTTP depuis le premier dispositif de traitement (400) vers un équipement utilisateur (600, 700) via une diffusion ou une multidiffusion le premier dispositif de traitement (400) étant configuré pour :
- déterminer dans quelles conditions un rapport de réception de temps d'exécution est requis de la part d'un équipement utilisateur spécifique recevant un service de diffusion en flux HTTP déterminé ;
- déterminer des paramètres de rapport, incluant une valeur seuil, destinés à être applicables au niveau de l'équipement utilisateur pour déterminer, au niveau de l'équipement utilisateur, quand il faut déclencher le rapport de réception de temps d'exécution, dans lequel le rapport de réception de temps d'exécution est basé sur des métriques de perte d'objets indiquées dans les paramètres de rapport, et la valeur seuil est établie en tant que pourcentage de perte d'objets sur tous les objets du service de diffusion en flux HTTP reçus par l'équipement utilisateur, de telle sorte que la transmission d'un rapport de réception de temps d'exécution depuis l'équipement utilisateur est déclenchée lorsque le pourcentage de perte d'objets dépasse la valeur seuil, et
- fournir les paramètres de rapport déterminés à l'équipement utilisateur.

5. Premier dispositif de traitement (400) selon la revendication 4, étant configuré pour exécuter l'étape de fourniture en association avec la fourniture du service de diffusion en flux HTTP.

6. Premier dispositif de traitement (400) selon l'une quelconque des revendications 4 ou 5 étant configuré pour :
- recevoir un rapport de réception de temps d'exécution depuis l'équipement utilisateur (600.700), et
- considérer au moins un amendement apparenté à la transmission, associé au service de diffusion en flux HTTP en cours au moins partiellement sur la base du contenu du rapport de réception de temps d'exécution reçu.

7. Premier dispositif de traitement (400) selon la revendication 6, étant configuré pour considérer au moins l'un des amendements apparentés à la transmission en considérant au moins l'un parmi :
- une augmentation du pourcentage de temps système FEC appliqué pour le service de diffusion en flux HTTP en cours ;
- une augmentation de la zone de service appliquée pour le service de diffusion en flux HTTP en cours, et
- une mise à jour de la configuration RAN par des réglages radio optimisés appliqués pour le service de diffusion en flux HTTP en cours.

8. Premier dispositif de traitement (400) selon l'une quelconque des revendications 4 à 7 dans lequel le premier dispositif de traitement (400) fait partie de ou est connecté à un BM-SC.

9. Programme informatique (450) comprenant des instructions lisibles par ordinateur qui,
lorsqu'elles sont exécutées sur un noeud de réseau amènent le noeud de réseau à :
- déterminer dans quelles conditions un rapport de réception de temps d'exécution est requis de la part d'un équipement utilisateur spécifique recevant un service de diffusion en flux HTTP déterminé,
- déterminer des paramètres de rapport, incluant une valeur seuil, destinés à être applicables au niveau de l'équipement utilisateur pour déterminer, au niveau de l'équipement utilisateur, quand il faut déclencher le rapport de réception de temps d'exécution, dans lequel le rapport de réception de temps d'exécution est basé sur des métriques de perte d'objets indiquées dans les paramètres de rapport, et la valeur seuil est établie en tant que pourcentage de perte d'objets sur tous les objets du service de diffusion en flux HTTP reçus par l'équipement utilisateur, de telle sorte que la transmission d'un rapport de réception de temps d'exécution depuis l'équipement utilisateur est déclenchée lorsque le pourcentage de perte d'objets dépasse la valeur seuil, et
- fournir les paramètres de rapport déterminés à l'équipement utilisateur.

10. Produit programme informatique (470) comprenant un programme informatique (450) selon la revendication 9 et un moyen lisible par ordinateur sur lequel le programme informatique (450) est stocké.

11. Procédé exécuté sur un équipement utilisateur pour recevoir un service de diffusion en flux HTTP depuis un noeud de réseau via une diffusion ou une multidiffusion, comprenant les étapes consistant à :
- déterminer (3:2) qu'un rapport de réception de temps d'exécution a été activé par un noeud de réseau fournissant un service de diffusion en flux HTTP déterminé ;
- recevoir (3:3) des paramètres de rapport décidant dans quelles conditions un rapport de réception de temps d'exécution doit être exécuté par l'équipement utilisateur ;
- mesurer (3:4) des statistiques de temps d'exécution sur la base d'au moins certains des paramètres de rapport déterminés ; et
- transmettre (3:6) des statistiques de temps d'exécution mesurées au noeud de réseau lors de la reconnaissance (3:5) d'un déclencheur de rapport, déclenché sur la base d'une valeur seuil, comprise dans les paramètres de rapport, dans lequel des métriques de perte d'objets sont utilisées en tant qu'entrée de rapport, et la valeur seuil est donnée en tant que pourcentage de perte d'objets sur tous les objets reçus du service de diffusion en flux HTTP, de telle sorte que la transmission d'un rapport de réception de temps d'exécution est déclenchée lorsque le pourcentage de perte d'objets dépasse la valeur seuil.

12. Procédé selon la revendication 11, dans lequel les paramètres de rapport incluent au moins l'une parmi : une période de résolution de mesure et une plage de mesure.

13. Deuxième dispositif de traitement (600) pour recevoir un service de diffusion en flux HTTP depuis un noeud de réseau (300, 400) via une diffusion ou une multidiffusion, le deuxième dispositif de traitement (600) étant configuré pour :
- déterminer qu'un rapport de réception de temps d'exécution a été activé par un noeud de réseau fournissant un service de diffusion en flux HTTP déterminé ;
- recevoir des paramètres de rapport décidant dans quelles conditions un rapport de réception de temps d'exécution doit être exécuté par le deuxième dispositif de traitement ;
- mesurer des statistiques de temps d'exécution sur la base d'au moins certains des paramètres de rapport déterminés ;
- rapporter des statistiques de temps d'exécution mesurées lors de la reconnaissance d'un déclencheur de rapport, déclenché sur la base d'une valeur seuil, comprise dans les paramètres de rapport, dans lequel une métrique de perte d'objets est utilisée en tant qu'entrée de rapport et la valeur seuil indique un pourcentage de perte d'objets sur tous les objets reçus du service de diffusion en flux HTTP ; et
- fournir un rapport de réception de temps d'exécution et transmettre le rapport à un noeud de réseau (300, 400) lorsque le pourcentage de perte d'objets dépasse la valeur seuil.

14. Deuxième dispositif de traitement (600) selon la revendication 13, étant configuré pour recevoir les paramètres de rapport en association avec la réception d'une fourniture du service de diffusion en flux HTTP depuis le noeud de réseau (300, 400).

15. Deuxième dispositif de traitement selon l'une quelconque des revendications 13 ou 14, dans lequel le deuxième dispositif de traitement fait partie d'un équipement utilisateur.

16. Programme informatique (650) comprenant des instructions lisibles par ordinateur qui,
lorsqu'elles sont exécutées sur un équipement utilisateur amènent l'équipement utilisateur à :
- déterminer qu'un rapport de réception de temps d'exécution a été activé par un noeud de réseau fournissant un service de diffusion en flux HTTP déterminé ;
- recevoir des paramètres de rapport décidant dans quelles conditions un rapport de réception de temps d'exécution doit être exécuté par l'équipement utilisateur ;
- mesurer des statistiques de temps d'exécution sur la base d'au moins certains des paramètres de rapport déterminés ;
- rapporter des statistiques de temps d'exécution mesurées lors de la reconnaissance d'un déclencheur de rapport, déclenché sur la base d'une valeur seuil, comprise dans les paramètres de rapport, dans lequel une métrique de perte d'objets est utilisée en tant qu'entrée de rapport et la valeur seuil indique un pourcentage de perte d'objets sur tous les objets reçus du service de diffusion en flux HTTP ; et
- fournir un rapport de réception de temps d'exécution et transmettre le rapport à un noeud de réseau lorsque le pourcentage de perte d'objets dépasse la valeur seuil.

17. Produit programme informatique (620a) comprenant un programme informatique (650) selon la revendication 16 et un moyen lisible par ordinateur sur lequel le programme informatique (650) est stocké.
